# EUROPEAN PATENT SPECIFICATION

(11) **EP 2 877 367 B1**
(45) Date of publication and mention of the grant of the patent: **06.01.2016**
(21) Application number: 13741750.7
(22) Date of filing: 25.07.2013
(51) Int. Cl.: B60L 5/00, H01F 38/14, H02J 5/00, B60M 7/00, B60L 11/18, H02J 7/02, B60L 9/00

(54) **CABLE SUPPORT FOR SUPPORTING A CONDUCTOR ARRANGEMENT PRODUCING AN ELECTROMAGNETIC FIELD, CONDUCTOR ARRANGEMENT, AND ROUTE FOR VEHICLES COMPRISING THE CONDUCTOR ARRANGEMENT**
KABELHALTER ZUR UNTERSTÜTZUNG EINER LEITERANORDNUNG ZUR HERSTELLUNG EINES ELEKTROMAGNETISCHEN FELDES, LEITERANORDNUNG UND ROUTE FÜR FAHRZEUGE MIT DER LEITERANORDNUNG
SUPPORT DE CÂBLE POUR SUPPORTER UN AGENCEMENT DE CONDUCTEUR PRODUISANT UN CHAMP ÉLECTROMAGNÉTIQUE, AGENCEMENT DE CONDUCTEUR, ET ROUTE POUR VÉHICULES COMPRENANT L'AGENCEMENT DE CONDUCTEUR

(30) Priority: 26.07.2012 GB 201214644
(43) Date of publication of application: 03.06.2015
(73) Proprietor: Bombardier Transportation GmbH, 10785 Berlin (DE)
(72) Inventor: GARCIA, Frederico, 68163 Mannheim (DE); PÉREZ, Sergio, 64665 Alsbach-Hähnlein (DE); CURRAN, Éanna, 64297 Darmstadt (DE)
(74) Representative: Patentanwälte Bressel und Partner mbB
(86) International application number: PCT/EP2013/065677
(87) International publication number: WO 2014/016365

(56) References cited:
- WO-A2-2011/046414
- US-A- 4 836 344

## Description

The invention relates to a cable support or cable support arrangement for supporting a conductor arrangement. The conductor arrangement is adapted for producing an electromagnetic field and thereby transferring energy to vehicles on a surface of a route, in particular a route for road automobiles. The invention also relates to a conductor arrangement, in particular a portable conductor arrangement, and a route comprising the conductor arrangement. The invention further relates to a method of building the cable support arrangement, the conductor arrangement, and a method of building the route.

The present invention can be applied to any land vehicle (including but not preferably, any vehicle which is only temporarily on land), in particular track-bound vehicles, such as rail vehicles (e.g. trams), but also to road automobiles, such as individual (private) passenger cars, trucks or public transport vehicles (e.g. busses including trolley busses which are also track-bound vehicles).

While travelling on a route vehicles require energy for driving (i.e. propulsion) and for auxiliary equipment which does not produce propulsion of the vehicle. Such auxiliary equipment includes, for example, lighting systems, heating and/or air-conditioning systems, ventilation and passenger information systems. Not only track-bound vehicles (such as trams), but also road automobiles can be operated using electric energy. If continuous electric contact between the travelling vehicle and an electric rail or wire along the route is not desired, electric energy can be either withdrawn from an on-board energy storage or can be received by induction from an arrangement of electric lines of the route.

The transfer of electric energy to the vehicle by induction forms a background of the invention. A route-sided conductor arrangement (primary side) forms a primary winding which produces an electromagnetic field. The field is received by a vehicle-sided conductor arrangement (secondary side), e.g. a coil, on board of the vehicle so that the field produces an electric voltage by induction. The transferred energy may be used for propulsion of the vehicle and/or for other purposes such as providing the auxiliary equipment of the vehicle with energy.

Generally speaking, the vehicle may be, for example, a vehicle having an electrically operated drive motor. However, the vehicle may also be a vehicle having a hybrid drive system, e.g. a system which can be operated by electric energy or by other energy, such as energy provided using fuel (e.g. natural gas, diesel fuel, petrol or hydrogen).

GB 2492825 A describes a conductor arrangement for producing an electromagnetic field and thereby transferring energy to vehicles driving on a surface of a route, in particular for transferring energy to road automobiles, wherein the conductor arrangement comprises a lower coating layer, an upper coating layer, at least one electric line, which - if arranged as part of the route - extends under the surface of the route in and/or about the travelling direction of the vehicles, wherein the at least one electric line is placed in between the lower and upper coating layer.

WO 95/30556 A2 describes a system wherein electric vehicles are supplied with energy from the roadway. The all-electric vehicle has one or more on-board energy storage elements or devices that can be rapidly charged or supplied with energy obtained from an electrical current, for example a network of electromechanical batteries. The energy storage elements may be charged while the vehicle is in operation. The charging occurs through a network of power coupling elements, e.g. coils, embedded in the track. Induction coils are located at passenger stops in order to increase passenger safety.

In contrast, the focus of the present invention is to transfer energy to the vehicle on the route, e.g. while it travels on the route or is parked on the route. WO 2010/031596 A2 discloses a shaped block for positioning and/or holding a plurality of line sections of one or more electric lines along a driving way of a vehicle, wherein the shaped block has a plurality of recesses and/or projections, wherein the edges of the recesses and/or projections for the line sections in each case form the boundary of a space, into which one of the line sections can be brought, so that it extends in a longitudinal direction of the space, and wherein the longitudinal directions of the spaces, delimited by the edges of the recesses and/or by the projections, extend essentially parallel to one another in a common plane.

If an alternating electric current flows through the electric lines, an electromagnetic field is produced that induces an electric current in a receiver of a vehicle which is travelling on the driving way. The shaped blocks facilitate the laying of the electric lines in the driving way. WO 2010/031596 A2 discloses ways of integrating the shaped blocks in railways for rail vehicles. For example, the shaped blocks are placed in between the rails, the electric lines are laid into the spaces defined by the blocks and the blocks are covered by lids.

US 4,836,344 discloses an electrical modular roadway system adapted for transmitting power to vehicles and controlling inductively coupled vehicles travelling thereon. The system comprises a plurality of elongated, electrically connected inductor modules arranged in an aligned end to end spaced apart order to form a continuous vehicle path. Each module has a magnetic core and power windings which generate a magnetic field extending above the road surface. The modules are embedded in the ground so as to be flush with the roadway surface over which a vehicle can travel. Each module is an elongated structure of uniform width and thickness so that they can be easily fabricated in quantity and readily installed in a roadbed with a minimum of labor and equipment. Each module comprises an iron core around which is wrapped a power winding comprising a series of coils.

The arrangement of these modules has disadvantages with respect to a reduced robustness and increased effort for building and maintenance of the roadway. Although the modules are pre-fabricated before they are laid on the route, the transport to a road construction site and the deployment on the road is difficult and time-consuming. Also, the blocks or modules are comparatively heavy. Furthermore, the electric line or lines should be protected against at least some of the substances which are typically used during construction of routes for vehicles.

WO 2011/046414 A2 discloses a power supply apparatus for supplying power to an electric vehicle by a magnetic induction mechanism. The apparatus includes a power supply structure including a multiple number of power supply rail modules connected in a forward road direction, each power supply rail module including at least one power supply line passage elongated in the forward road direction, a power supply core of a lattice structure provided below the power supply line passage, and a concrete structure incorporating the power supply line passage and the power supply core; at least one power supply line accommodated in the power supply line passage in the forward road direction and surrounded by an insulating pipe; and at least one common line provided in the forward road direction and surrounded by an insulating pipe, for supplying power to the power supply apparatus.

The US 4,836,344 A discloses an electrical roadway adapted for transmitting power to and controlling inductively coupled vehicles traveling thereon comprising: a plurality of elongated inductor modules arranged in an aligned end to end spaced apart order to form a vehicle path, each of said modules being disposed within the roadway adjacent to its upper surface and responsive to an electric current flowing therethrough to generate a magnetic field extending above said surface; and inductively controllable means connected to said modules for preventing full operating electric current from flowing through a selected one or more of said plurality of modules and thereby temporarily deactivating the field generating capacity thereof.

It is an object of the present invention to facilitate the construction of routes for vehicles, in particular land vehicles such as track-bound vehicles or road automobiles, wherein the routes comprise conductor arrangements for producing an electromagnetic field in order to transfer energy to the vehicles on the route. In particular, it is an object to provide a cable support arrangement and a conductor arrangement which reduces a transportation effort and a deployment complexity while building the route. It is also an object of the invention to provide a simple and flexible assembly of a route in places where no induction system is available.

According to a basic idea of the present invention, it is proposed to provide a foldable cable support or a foldable cable support arrangement for supporting a conductor arrangement comprising multiple electric lines, but not to integrate the conductor arrangement into blocks or modules before the route is actually constructed. Consequently, the weight and the required space of the cable support arrangement, which can be pre-fabricated, is smaller compared to solid blocks or modules. Furthermore, the thickness (in vertical direction) of the arrangement can be smaller compared to the shaped blocks and modules. Also, a protection of electric lines of the conductor arrangement against external influences, in particular dirt, water, chemicals which are used during the route construction is provided.

According to the invention, a cable support for supporting a conductor arrangement for producing an electromagnetic field and thereby transferring energy to vehicles on a surface of a route is proposed. The cable support can also be referred to as cable support arrangement.

The conductor arrangement can be used for transferring energy to any land vehicle such as track-bound vehicles, for example rail vehicles (e.g. trams), but also to road automobiles, such as individual (private) passenger cars, trucks or public transport vehicles (e.g. busses including trolley busses which are also track-bound vehicles).

Energy can be transferred to the vehicle on the surface of the route in a dynamic setting, e.g. when the vehicle drives or travels on a driving surface of the route (dynamic transfer, e.g. dynamic charging). Energy can also be transferred to the vehicle on the surface of the route in a static setting, e.g. when the vehicles stands or parks on a surface of the route (static transfer, e.g. static charging). In the last case, the cable support arrangement can be part of a charging pad.

The cable support arrangement comprises a first supporting layer adapted to position and/or to hold a plurality of line sections of a first electric line. The first supporting layer can comprise guiding means for guiding at least one of the line sections of the first electric line. In particular, the first supporting layer can comprise recesses forming spaces and/or comprises projections delimiting spaces, wherein the spaces are adapted to receive at least one of the line sections of the first electric line. The first supporting layer, however, can alternatively be a coating layer without any guiding means for guiding at least one of the line sections of the first electric line.

The first electric line can be a part of a primary side conductor arrangement, in particular a multiphase primary winding. In particular, the first electric line can carry a first phase of a multiphase alternating current which generates an electromagnetic field.

According to the invention the cable support arrangement further comprises a second supporting layer adapted to position and/or to hold a plurality of line sections of a second electric line. The second supporting layer can comprise guiding means for guiding at least one of the line sections of the second electric line. In particular, the second supporting layer can comprise recesses forming spaces and/or comprises projections delimiting spaces, wherein the spaces are adapted to receive at least one of the line sections of the second electric line. The second supporting layer, however, can alternatively be a coating layer without any guiding means for guiding at least one of the line sections of the second electric line.

The second electric line can be another part of primary side conductor arrangement. In particular, the second electric line can carry a second phase of a multiphase alternating current which generates the electromagnetic field.

The first electric line can be fixed on or attached to the first supporting layer. For example, the first electric line can be glued, clamped, clipped and/or latched to the first supporting layer. Any other means to attach the first electric line to the first supporting layer is also possible. The second electric line can be fixed on or attached to its supporting layer in one of the ways mentioned before with respect to the first electric line. Although preferred, there is no need for fixing or attaching the electric lines to/on the respective supporting layer in the same manner.

The first and the second supporting layer are foldably connected to each other. In other words, the first and the second supporting layer are connected such that they can be folded on top of each other. Preferably, the first and the second supporting layer are connected such that the first supporting layer is congruent to the second supporting layer in a folded configuration. This means that sides, e.g. face sides and longitudinal sides, of the first and the second supporting layer are aligned in the folded configuration and no overlap exists.

The first and the second supporting layer can comprise longitudinal sides which e.g. extend in a direction of travel if the first and the second supporting layer are embedded into a route. Also, the first and the second supporting layer can comprise face sides which extend transversely to the longitudinal sides.

The first and the second electric line can be arranged on or fixed to the supporting layers such that in a folded configuration, a predetermined distance of parallel sections of the first and the second electric line which extend transverse to the longitudinal direction is provided. Thus, a desired phase shift between different phases of an alternating current carried by the first and the second electric line can be provided by the design of the proposed cable support arrangement. Also, the first and the second electric line can be arranged on or fixed to the supporting layers such that in a folded configuration, sections of the first and the second electric line which extend in the longitudinal direction are placed on top of each other.

If the first and the second supporting layer comprises guiding means, these guiding means can be designed such that sections of the first electric line and the second electric line which are guided by the guiding means can extend in and/or transverse to a longitudinal direction of the supporting layer which e.g. extends in a direction of travel if the supporting layer is arranged on, outside or within a route. Furthermore, the guiding means can be designed such that in a folded configuration, a predetermined distance of parallel sections of the first and the second electric line which extend transverse to the longitudinal direction is provided. Thus, a desired phase shift between different phases of an alternating current carried by the first and the second electric line can be provided by the design of the proposed cable support arrangement. Also, the guiding means can be designed such that in a folded configuration, sections of the first and the second electric line which extend in the longitudinal direction are placed on top of each other.

The first and the second supporting layer can be folded along a longitudinal side or along a face side of the supporting layers. The first and the second supporting layer can be made of flexible material. The proposed cable support arrangement can be a portable cable support arrangement.

The proposed cable support arrangement advantageously provides a cable support which allows pre-fabrication of an e.g. three-phase conductor arrangement, wherein the cable support arrangement is portable, lightweight and requires less transport volume if folded.

Also, the cable support arrangement advantageously allows a simplified installation or deployment of a multi-phase conductor arrangement. For example, the cable support arrangement can be brought into an unfolded configuration and the first and second electric line can be placed on or within the respective supporting layer. Then, the resulting conductor arrangement can be transported to a construction site in an unfolded or a folded configuration. Finally, the folded conductor arrangement can be arranged on or outside the route. Alternatively, the folded conductor arrangement can be integrated in standard route construction material during the building (i.e. the construction process) of the route. If the conductor arrangement is assembled on site or transported to the site in an unfolded configuration, the conductor arrangement can be folded on site. By this folding and the design of the conductor arrangement, a first and a second phase of e.g. a route-sided primary winding are provided. Also, the proposed cable support arrangement provides a flexibility of assembly in places where no system for inductive power transfer is available.

In a preferred embodiment, the cable support comprises a third supporting layer adapted to position and/or to hold a plurality of line sections of a third electric line. According to the first and second supporting layer, the third supporting layer can comprise guiding means for guiding at least one of the line sections of the third electric line. In particular, the third supporting layer can comprise recesses forming spaces and/or comprises projections delimiting spaces, wherein the spaces are adapted to receive at least one of the line sections of the third electric line. The third supporting layer, however, can alternatively be a coating layer without any guiding means for guiding at least one of the line sections of the third electric line. The third electric line can be another part of primary side conductor arrangement. In particular, the third electric line can carry a third phase of a three-phase alternating current which generates the electromagnetic field.

The first, the second, and the third supporting layer are foldably connected to each other. Thus, the first, the second, and the third supporting layer are connected such that they can be folded on top of each other. Preferably, the supporting layers are connected such that the supporting layers are congruent to each other in a folded configuration. This means that sides, e.g. face sides and longitudinal sides, of the respective supporting layers are aligned in the folded configuration and no overlap exists.

This advantageously allows providing a cable support arrangement for a three-phase primary winding which is portable, requires a reduced transport volume, and is easy to deploy.

In another embodiment, the foldable connection is provided by a folding line. The folding line can extend in a longitudinal direction of the supporting layers, e.g. in the direction of travel, if the cable support arrangement is arranged on, outside, or within a route. In this case, the supporting layers can be folded about their longitudinal sides. Alternatively, the folding line can extend in a transverse direction of the supporting layers, e.g. transverse to the direction of travel. In this case, the supporting layers can be folded about their face sides.

The folding line can be provided with a fillister or a folding chamfer which is integrated into the material of the supporting layers. The folding line is designed such that folding about the folding line requires less effort than folding about a line different to the folding line. Thus, the folding line advantageously provides a folding aid which also ensures that in a folded configuration the desired arrangement of the respective electric lines is achieved.

In another embodiment, the first supporting layer and/or the second supporting layer and/or the third supporting layer each comprise a lower coating layer and an upper coating layer, wherein the corresponding electric line is placeable in between the lower and upper coating layer. More generally, at least one or all supporting layers of the cable support arrangement can comprise a lower coating layer and an upper coating layer. The supporting layers can e.g. comprise guiding channels provided in between the lower and the upper coating layers through which the respective electric lines can extend. This advantageously allows providing a cable support arrangement, wherein cables can be protected from e.g. external influences, in particular dirt, water, chemicals which are used during the route construction. The coating layers may also insulate the at least one electric line with respect to heat transfer from route construction material (such as heated asphalt).

In another embodiment, at least two supporting layers or all supporting layers of the cable support arrangement are parts of a common sheet. For example, the first supporting layer and/or the second supporting layer and/or the third supporting layer are parts of a common sheet. It is, however, possible that the cable support arrangement comprises more than three supporting layers. The common sheet can be made of flexible material. Also, the common sheet can comprise the folding line. Thus, the folding line separates the different supporting layers which are comprised by the common sheet. For example, a fillister or a folding chamfer can be arranged on the common sheet. This advantageously allows a simple fabrication of the supporting layers and the cable support arrangement.

In another embodiment, the cable support is additionally rollable or furable. This means that the cable support can be rolled up or furled in an unfolded and/or folded configuration. This additionally enhances the transportability of the proposed cable support arrangement and also the deployment of a conductor arrangement comprising the cable support arrangement on site.

Furthermore, a conductor arrangement is proposed. The conductor arrangement is used for producing an electromagnetic field and thereby transferring energy to vehicles on a surface of a route, in particular for transferring energy to road automobiles. The conductor arrangement comprises a first supporting layer adapted to position and/or to hold a plurality of line sections of a first electric line and a first electric line positioned on or within the first supporting layer.

According to the invention, the cable support arrangement further comprises a second supporting layer adapted to position and/or to hold a plurality of line sections of a second electric line and a second electric line positioned on or within the second supporting layer, wherein the first and the second supporting layer are foldably connected to each other.

Hence, the proposed conductor arrangement comprises one of the aforementioned cable support arrangements and the corresponding electric lines. Preferably, the conductor arrangement also comprises a third supporting layer adapted to position and/or to hold a plurality of line sections of a third electric line and a third electric line positioned on or within the third supporting layer, wherein the first, the second, and the third supporting layer are foldably connected to each other.

Sections of the electric lines can extend in and/or transverse to a longitudinal direction of the respective supporting layer which can be the direction of travel if the conductor arrangement is arranged on, outside or within a route, e.g. if the conductor arrangement is embedded into or laid on a route. Furthermore, the electric lines can be placed on the corresponding supporting layers with respect to another such that in a folded configuration, a predetermined distance of parallel sections which extend transverse to the longitudinal direction is provided. Thus, a desired phase shift between different phases of an alternating current carried by the electric lines can be provided by the design of the proposed conductor arrangement. Also, the electric lines can be placed on the corresponding supporting layers with respect to another such that in a folded configuration, sections of the electric lines which extend in the longitudinal direction are placed on top of each other. The supporting layers can be connected such that by folding the supporting layers with the respective electric lines, a desired primary multiphase winding configuration is achieved.

Preferably, the electric line of each supporting layer can extend along the longitudinal direction of the supporting layer in a serpentine manner (i.e. sections of the electric line which extend in the longitudinal direction are followed in each case by a section which extends transversely to the longitudinal direction which in turn is followed again by a section which extends in the longitudinal direction and so on, which can also be called "meandering"). In case of a multiphase system, preferably the electric lines of all supporting layers of the conductor arrangement are arranged in this manner; the expression "serpentine" covers lines having a curved configuration and/or having straight sections with curved transition zones to neighbouring sections; straight sections are preferred, since they produce more homogenous fields. Another expression for "serpentine manner" is "meandering".

Each line can be adapted to carry a different one of phases of an alternating electric current; preferably, the electric conductor arrangement comprises three supporting layers with each layer comprising an electric line, each electric line carrying a different phase of a three-phase alternating current.

Also, an overall primary side conductor arrangement can comprise a plurality of segments, wherein each segment extends along a different section of the path of travel of the vehicle; each segment may comprise one or more foldable conductor arrangement(s). The phase lines of each conductor arrangement within a segment may be electrically connected to the corresponding phase lines of any consecutive conductor arrangement (series connection of the phase lines).

Each segment may be combined with at least one device adapted to switch on and off the segment separately of the other segments. The phase lines of each segment may be electrically connected to the corresponding phase lines of any consecutive segment (series connection of the phase lines). Alternatively, the phase lines of the consecutive segments may be insulated against each other and - for example - may be connected to the power supply via a separate inverter or switch for each segment (parallel connection of the phase lines). In case of a parallel connected phase lines, all phase lines of a segment may be connected to each other at a star point. The length of a segment in travel direction can differ from the length of a foldable conductor arrangement in travel direction. Preferably, each segment is made of at least one separate pre-fabricated foldable conductor arrangement. However, it is also possible that the same pre-fabricated foldable conductor arrangement comprises electric lines of different segments.

It is possible that a supporting layer comprises guiding means for receiving at least one of the line sections of the corresponding electric line, wherein the corresponding electric line extends through the guiding means of the supporting layer. The proposed conductor arrangement can be a portable conductor arrangement.

The proposed conductor arrangement advantageously provides a conductor arrangement which allows pre-fabrication of an e.g. three-phase conductor arrangement, wherein the conductor arrangement is portable and requires less transport volume if folded. Also, the conductor arrangement advantageously allows a simplified installation or deployment of a multiphase conductor arrangement. For example, a desired primary multiphase winding configuration can be achieved by simply folding the proposed conductor arrangement on site. Thus, the folded conductor arrangement can be integrated in standard route construction material during the building (i.e. the construction process) of the route. Alternatively, the folded conductor arrangement can be laid on or outside, e.g. adjacent or neighbouring, to an existing route. Thus, a simple modification of existing routes in order to provide an inductive power transfer option is provided.

In another configuration, the first and/or the second and/or a third supporting layer each comprise a lower coating layer and an upper coating layer, wherein the lower and upper coating layer are connected to each other at connection areas on opposite sides of the at least one electric line so that the respective electric line is enclosed by the lower and upper coating layer and optionally by additional material establishing the connection of the lower and upper coating layer. Preferably, there is a plurality of connection areas on each of the opposite sides of the electric line or lines.

The electric lines are therefore placed in the interior of a covering during fabrication of the e.g. pre-fabricated arrangement. The interior of the covering may be the interspace of coating layers and/or a hermetically sealed space. Any variant of the two following principles is also possible: a) the interior is covered by coating layers, but comprises openings to the ambience, or b) the interior is hermetically sealed. In any case, it is preferred that the coating layers are thin and sheet-like, such that textile layers, non-woven fibre layers, foils, membranes or any combination thereof. It is also possible that at least one of the coating layers does not exist as a continuous layer before manufacturing the conductor arrangement. For example, a liquid material and/or sheet-like pieces may be provided and may be used to form the coating layer. For example, the sheet-like pieces may be textile mats. The material of the mats may be the same material as mentioned above (for example foil or non-woven material comprising fibres).

It is also possible that the electric line placed in between the coating layers can be sealed completely by the lower and upper coating layers and, optionally, by additional material between the coating layers and/or additional material between one of the coating layers and the line. A complete sealing does not exclude that a connection of the electric line protrude from the respective conductor arrangement. This connection may be a section of the electric line which is not covered by a coating layer. The connection may connect the electric line to electric and/or electronic devices, such as inverters and/or switches. During construction of the route, the connection can be placed within a metal trough or other cavity which remains free of route building material (such as asphalt), for example.

The coating layers may be fixed to each other and/or to the electric line or lines indirectly using additional material (such as resin and/or adhesive material) and/or directly (e.g. by thermal fusion).

Different layers of the coating material, e.g. the lower and the upper coating layer, may be parts of the same sheet material. For example, these different layers may be achieved by folding the layers on top of each other. Folding the same sheet has the advantage that the different layers are firmly connected to each other in the folding region, saving work for establishing the connection.

In particular or alternatively, the coating layer may be flexible, at least before the electric line(s) are connected to the coating layer. It is also possible that the coating layers are rigid layers. In this case, however, a connection of the coating layers of the first supporting layer and the coating layers of the second supporting layer has to be flexible to allow the folding of the supporting layers.

In any case, it is preferred that the coating material of the conductor arrangement follows the outline of the at least one electric line placed in the respective interspace. It is possible that in contrast to the shaped blocks mentioned above, at least one of the upper and lower surfaces of the pre-fabricated conductor arrangement is not flat, but comprises protrusions where the electric line extends. One advantage of this feature is that firmly embedding the pre-fabricated conductor arrangement is facilitated.

For example, the sheet-like material may be a mesh, such as made of polymer elements, e.g. polypropylene or polyethylene terephthalate (PET) elements. Such meshes are offered, for example, by Naue GmbH & Co. KG, 32339 Espelkamp, Germany, under the German registered trademark "Combigrid", registration number 39965958. This type of mesh has welded junctions and also comprises non-woven components for reinforcement. The polymer mesh elements which are contacted to each other at the welded junctions may be monolithic and the non-woven components may be textile elements comprising fibres.

An alternative sheet-like material is a so-called stress absorbing membrane interlayer (SAMI). Such SAMI-layers are known in the field of route construction for covering layers comprising cracks. Preferred SAMI-layers for the purpose of the present invention comprise hydrocarbons. Therefore, and the same applies to the mesh mentioned above having also hydrocarbon components, an asphalt layer as cover layer forms an excellent contact or chemical compound with the sheet-like material.

In particular, the coating layers may comprise through-holes which extend through the e.g. pre-fabricated conductor arrangement. Therefore, the materials of the layers below and above the conductor arrangement may contact each other through the through-holes, so that there is excellent contact between these layers and the pre-fabricated conductor arrangement is firmly held in place.

Furthermore, it is preferred that the coating layers of a supporting layer or the supporting layer itself and/or additional material (such as resin) is/are used to fix the respective electric line of the electric conductor arrangement in a desired position. Thus, different sections of the electric lines of different supporting layers can be fixed relative to each other via the coating layers and/or the additional material. This does not exclude the case that the conductor arrangement is still flexible in shape to some extent. In particular, the desired relative arrangement of different sections of electric lines of different supporting layers can be achieved by folding the supporting layers. In this case, a desired primary multiphase winding can be created by folding the supporting layers. If the conductor arrangement is additionally rollable such that the conductor arrangement can be rolled up in an unfolded and/or folded configuration, the desired primary multiphase winding can be created by first unrolling and then, if applicable, folding the supporting layers.

The e.g. pre-fabricated conductor arrangement can be arranged on or outside an existing route or integrated in standard route construction material during the building (i.e. the construction process) of the route. During this process of integration on site (i.e. where the route is to be constructed) the coating layers protect the conductor arrangement from external influences, in particular dirt, water, chemicals which are used during the route construction and the coating layers may also insulate the at least one electric line with respect to heat transfer from route construction material (such as heated asphalt).

For example, the lower and upper coating layers may extend essentially within a horizontal plane, with the exception of corrugations where the at least one electric line is located. In this case, the connected areas are located on opposite sides of the electric line within the horizontal plane.

In another embodiment, the connection areas on the opposite sides extend along the extension of the at least one electric line. In this manner, the electric line is sealed against the ambience, at least on the side or sides where the connection area extends.

According to another embodiment, at least one position holder is located in between the lower and upper coating layer, wherein the position holder connects at least one section of the at least one electric line with another section of the line for holding the sections in position relative to each other. The position holder may be made of solid state material and may be placed in between the sections of the electric line before the upper coating layer is placed on top of the lower coating layer and the electric line. This advantageously increases stability of the pre-fabricated conductor arrangement with respect to the relative positions of different sections of the electric line.

The proposed conductor arrangement provides a portable conductor arrangement which can be adapted to any route.

Furthermore, a route for vehicles, in particular for road automobiles, is proposed, wherein one of the previously described conductor arrangements is arranged on, outside or within the route in a folded configuration. The term route denotes a section or multiple sections of the ground providing a driving surface or a parking surface for the vehicle. Thus, the route can denote a section of a road or a section of a parking lot or parking space, e.g. a garage. In case of a parking space, the conductor arrangement can be part of a charging pad arranged on, outside or within the route. "Outside" means that the electric lines are arranged neighbouring or adjacent to the route. In this case, however, a distance of the electric lines and a vehicle driving or standing on the surface of the route has to be chosen such that a desired inductive power transfer is still possible. E.g. a distance of the electric lines and a vehicle driving or standing on the surface of the route has to be smaller than a predefined value.

The electric lines can extend in and/or about the travelling direction of vehicles which are driving on the route. Also, the electric lines can extend along or parallel to a surface of the route.

Preferably, one of the previously described conductor arrangements is embedded in a material of the route in a folded configuration. Preferably, the electric lines extend under the surface of the route. In other words, the electric lines can extend under the surface of the route in and/or transverse to the travelling direction of vehicles which are driving on the route.

The route for vehicles driving may comprise at least one cover layer which cover(s) the pre-fabricated conductor arrangement. The cover layer or one of the cover layers may be a surface layer forming the surface of the route on which vehicles can travel. The preferred material is asphalt, which preferably forms a continuous (in particular approximately horizontal) cover layer which covers the pre-fabricated conductor arrangement.

Optionally, the route building material of different layers or regions of the route may be of the same type. The "same type of material" means that at least one component of the material is formed by the same chemical substance or by a similar chemical substance so that neighbouring regions of the same material have excellent surface contact or even form a common chemical compound. For example, this is the case with the material asphalt which contains bitumen (i.e. a type of hydrocarbons) as a component. However, the additional components of asphalt may vary, i.e. all types of asphalt contain bitumen, but may contain different additives (in particular stones).

The pre-fabricated conductor arrangement, however, can also be arranged outside the layers forming the route, e.g. in a box, casing or station which is arranged adjacent to a route surface. It is also possible that the pre-fabricated conductor arrangement is set or embedded in concrete, e.g. a concrete block or casing, wherein the block/casing is arranged on or adjacent to a route surface.

Preferably, the route comprises gaps between consecutive sections of the route in the direction of travel, wherein the gaps extend perpendicular to the direction of travel and allow relative movement between the consecutive sections of the route due to movement of the underground and/or due to thermal expansion and contraction. Typically, these gaps are filled by elastically deformable material. It is preferred that the conductor arrangement extends continuously across the gap between the consecutive sections of the route. This means that no additional electric connection is to be made at the gap which connects different electric lines, for example electric connectors or soldered electric connections. In particular, the electric lines preferably have a continuous electric insulation extending along the line. Since electric lines, including their insulation, are typically elastically deformable to some extent, the electric lines extending across the gap deform in a corresponding manner to the extension or compression of the gap. It is preferred that the other components of the conductor arrangement are also elastically deformable.

Therefore, the route can easily be built by first folding an unfolded conductor arrangement and placing said conductor arrangement on e.g. a base layer of the route, then applying the route construction material above the folded conductor arrangement, therein leaving the at least one gap free of route building material and/or cutting out the gap(s) and finally treating the gaps in conventional manner, for example by filling the gaps with elastically deformable material. Alternatively, the route can easily be built by first folding an unfolded conductor arrangement and laying said conductor arrangement on a route surface or next to the route surface.

The route may comprise a base layer which may be any suitable base layer. In particular the base layer may be made of sand cement, lean concrete or roller compacted concrete. There may be plural base layers on top of each other. However, the base layer may be an existing base layer of a route which has been used by vehicles. In this case, for example at least one layer above the base layer, or at least a part of the layer above the base layer can be removed from the existing route and the integrated layer and the cover layer may be placed above the base layer. The pre-fabricated conductor arrangement may be placed upon the base layer(s) in a folded configuration.

Preferably, a magnetic core material is integrated in the route. In particular, the magnetic core material (for example ferrite) is placed within a core space formed by recesses and/or delimited by projections of the base layer. For example, a groove may extend on the upper side of the base layer in the direction of travel of vehicles. Preferably, the magnetic core material is placed first in the respective core space and then the pre-fabricated conductor arrangement is placed upon the base layer or on the surface layer in a folded configuration. Consequently, it is preferred that the magnetic core material is placed below line sections of the electric lines of the pre-fabricated conductor arrangement. However, the magnetic core may alternatively be placed at another location within the route.

Preferably, some line sections which extend transversely to the direction of travel extend across the magnetic core if viewed from above. Therefore, strong magnetic poles can be produced by these line sections during energy transfer to a vehicle driving on the route.

Furthermore, it is preferred that the route comprises a shielding layer of electrically conducting material (for example aluminium) which is placed below the folded conductor arrangement. Such a shielding layer shields the electromagnetic field produced by the electric line so that requirements concerning electromagnetic compatibility of EMC are met. For example, other electric lines or pipings may be buried in the ground below the route which need to be protected against electromagnetic fields. Particularly preferred is that there is magnetic core material and, in addition, a shielding layer.

The route may be equipped with electric and/or electronic devices which are adapted to operate the electric lines of the foldable conductor arrangement. One of the devices may be an inverter for generating an alternating current from a direct current. The direct current may be carried by a supply line which supplies electric energy to the conductor arrangement. The alternating current may be the current which is carried by the conductor arrangement to produce the electromagnetic field. Since comparatively high powers are required by the vehicle (if - as preferred - a propulsion motor is operated with the energy), a corresponding power inverter produces significant energy losses in form of heat power. However, the electric and/or electronic device for operation of the electric lines of the foldable conductor arrangement may comprise other types of devices, such as power switches to switch on and off the electric lines of the foldable conductor arrangement, constant current devices for providing constant current through the electric lines, detection devices for detecting the presence of a vehicle, star point connections for electrically connecting a plurality of electric phase lines and other devices.

These devices can be arranged in boxes or other casings above ground. Therefore, the heat losses produced by the devices can easily be transferred to the ambience. However, this may result in unacceptable noise production if ventilators are used to force the cooling of the devices. Furthermore, especially within historic parts of cities, casings above ground are not acceptable. Therefore, at least some of the devices may be buried in the ground, e.g. sideways of the route and/or within a cut-out or cavity of the route. In particular, a cut-out or cavity of the route may be used to reduce emission of electromagnetic fields to the environment.

Furthermore, a method of manufacturing a cable support or cable support arrangement for supporting a conductor arrangement is proposed. The conductor arrangement is adapted to produce an electromagnetic field and thereby to transfer energy to vehicles driving on a surface of a route. A first supporting layer adapted to position and/or to hold a plurality of line sections of a first electric line is provided. Also, a second supporting layer adapted to position and/or to hold a plurality of line sections of a second electric line is provided. Finally, a foldable connection between the first and the second supporting layer is provided. The first and/or the second supporting layer can comprise guiding means for guiding the electric lines. The method advantageously allows providing a foldable cable support arrangement which can be used to build a desired multiphase primary winding, e.g. by folding the supporting layers on top of each other.

Furthermore, a method of manufacturing a conductor arrangement which is adapted to produce an electromagnetic field and thereby to transfer energy to vehicles driving on a surface of a route is proposed. First, a first supporting layer adapted to position and/or to hold a plurality of line sections of a first electric line is provided. On or within the first supporting layer, a first electric line is placed or arranged. The first electric line can extend in a serpentine manner, e.g. in a serpentine manner along a longitudinal direction of the supporting layer. This means that sections of the first electric line which extend in the longitudinal direction are followed in each case by a section which extends transversely to the longitudinal direction which in turn is followed again by a section which extends in the longitudinal direction.

According to the invention, a second supporting layer adapted to position and/or to hold a plurality of line sections of a second electric line is provided and a second electric line is arranged or placed on or within the second supporting layer. Furthermore, a foldable connection between the first and the second supporting layer is provided.

The first electric line and the second electric line are arranged on the respective supporting layer such that in a folded configuration, a desired multiphase primary winding is achieved. In particular, the first electric line and the second electric line are spaced from one another by (a) predefined distance(s). In case of a multiphase system preferably all lines of the conductor arrangement are arranged in a serpentine or meandering manner.

In another embodiment, for each supporting layer, a lower coating layer and an upper coating layer is provided, wherein the respective electric line is placed or arranged in between the lower and upper coating layer. Thus, a pre-fabricated conductor arrangement comprising the lower and upper coating layer as well as the at least one electric line can be formed.

Furthermore, the invention includes a method of building a route for vehicles, in particular for road automobiles, wherein the pre-fabricated conductor arrangement is folded and then arranged on, within, or outside the route. For example, the conductor arrangement can be embedded in a route building material of the route, wherein the route building material is adapted to carry the weight of vehicles driving on the route. However, the pre-fabricated conductor arrangement can also be arranged on or outside the route. The pre-fabricated route can easily be placed on an existing route. It may also be used inside a route-sided station or casing for inductive power transfer which may be a fixed or a portable station/casing.

The conductor arrangement is folded so that the electric lines of the conductor arrangement form a desired multiphase winding. The conductor arrangement can also be arranged such that the electric lines extend in and/or about the travelling direction of the vehicles. Preferably, the electric lines of the conductor arrangement extend under the surface of the route.

Examples and preferred embodiments of the invention will be described with reference to the attached figures which show
- Fig. 1: schematically a road having two lanes, wherein electric lines are laid under the surface of one of the lanes using pre-fabricated conductor arrangements,
- Fig. 2: a plan view of a three-phase conductor arrangement in an unfolded configuration,
- Fig. 3: a plan view of the three-phase conductor arrangement shown in Fig. 2 in a folded configuration,
- Fig. 4: a perspective view of the three-phase conductor arrangement shown in Fig. 2 in an unfolded and rolled-up configuration,
- Fig. 5a: a side view of a first supporting layer comprising a lower coating layer and an upper coating layer, and
- Fig. 5b: a side view of another first supporting layer comprising a lower coating layer and an upper coating layer.

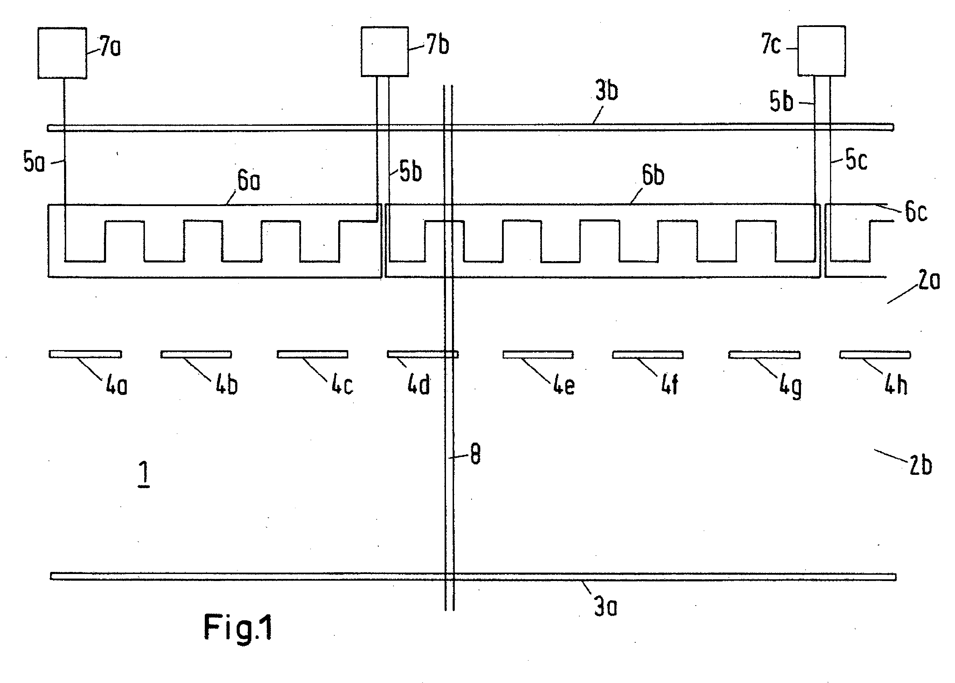

The schematic top view of Fig. 1 shows a road 1 having two lanes 2a, 2b. The lanes 2a, 2b are marked by solid, continuous lines 3a, 3b at the outer margins and are visually separated by a common dashed line made of line parts 4a, 4b, 4c, 4d, 4e, 4f, 4g, 4h. Consequently, the direction of travel extends from left to right or from right to left in Fig. 1. The width of the lanes 2a, 2b is large enough so that a vehicle can travel on either lane 2a or lane 2b or so that two vehicles can travel next to each other on the lanes 2a, 2b.

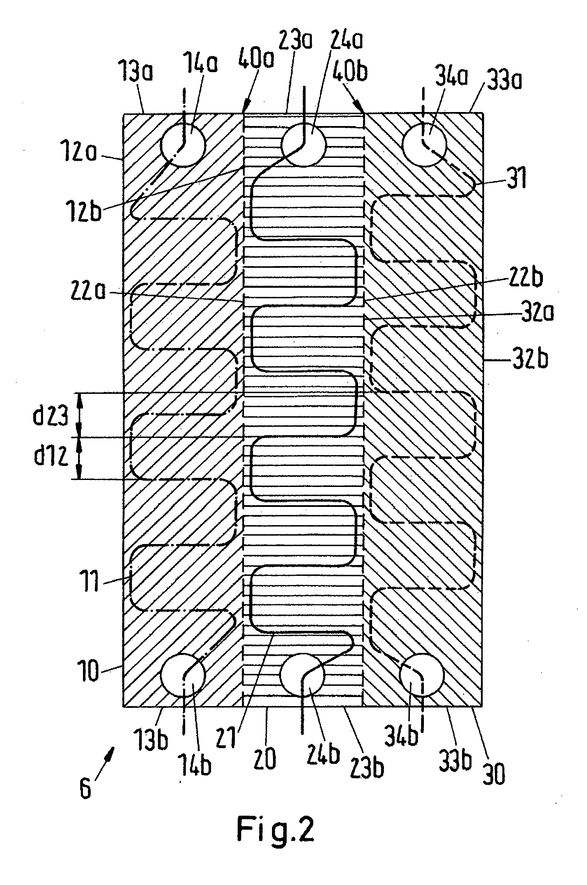

One of the lanes, namely lane 2a, is equipped with multiphase primary windings 5a, 5b, 5c for producing an electromagnetic field. The multiphase primary windings 5a, 5b, 5c (for example comprising each three electric phase lines 11,21,31 (see e.g. Fig. 2) for producing a three-phase alternating current) are parts of a pre-fabricated foldable conductor arrangement 6a, 6b, 6c, which hold the electric lines 11,21,31 of the multiphase primary windings 5a, 5b, 5c in place while the route 1 is constructed. However, due to a cover layer, the multiphase primary windings 5a, 5b, 5c are not visible in practice, if the finished road 1 is viewed from above. However, Fig. 1 shows three consecutive conductor arrangements 6a, 6b, 6c. The line of consecutive pre-fabricated conductor arrangements 6a, 6b, 6c continues towards the right beyond the limits of Fig. 1. The total conductor setting comprises at least three consecutive segments which can be operated separately of each other and each segment is made using a single pre-fabricated conductor arrangement 6a, 6b, 6c. This means, for example, the multiphase primary winding 5a is operated while a vehicle (not shown) travels above the corresponding segment whereas the other multiphase primary windings 5b, 5c are not operated. If the vehicle reaches the segment of the multiphase primary winding 5b, this multiphase primary winding 5b is switched on and multiphase primary winding 5a is switched off. Corresponding switches and/or inverters may be integrated in devices 7a, 7b, 7c shown in the top region of Fig. 1.

The preferred way of laying the electric lines 11, 21, 31 of a multiphase primary winding 5a, 5b, 5c is to form a meandering path or meandering paths, which means that the respective electric lines 11,21,31 have sections that extend transversely to the direction of travel. For the sake of simplicity, the multiphase primary windings 5a, 5b, 5c are shown by one single line although the multiphase primary windings 5a, 5b, 5c may comprise three electric lines 11, 21, 31 arranged with an offset to one another. For example, the primary multiphase winding 5a has eight transversely extending sections. The primary multiphase winding 5a is connected to devices 7a, 7b.

In the middle section of Fig. 1 there are two parallel lines extending transversely to the direction of travel. These lines are lines at the end of route sections having a gap 8 between each other for allowing relative movement and/or thermal expansion or contraction. The gap 8 is not located between two consecutive pre-fabricated conductor arrangements 6a, 6b, 6c but the multiphase primary winding 5b of pre-fabricated conductor arrangement 6b extends across the gap 8 which may be filled with an elastically deformable material, such as bitumen.

Fig. 2 shows a plan view of a three-phase conductor arrangement 6 in an unfolded configuration. The conductor arrangement 6 comprises a first supporting layer 10. A first electric line 11 is positioned within the first supporting layer 10. The first electric line 11 can be used to carry a first phase of a multiphase primary winding 5a, 5b, 5c (see Fig. 1) for producing a three-phase alternating current. The first supporting layer 10 comprises longitudinal sides 12a, 12b which extend in a direction of travel if the first supporting layer 10 is embedded into a route 1 (see Fig. 1). Also, the first supporting layer 10 comprises face sides 13a, 13b which extend transversely to the direction of travel. The first electric line 11 extends along a longitudinal direction of the first supporting layer 10 in a serpentine manner (i.e. sections of the electric line 11 which extend in the longitudinal direction are followed in each case by a section which extends transversely to the longitudinal direction). The longitudinal direction corresponds to the direction of travel if the first supporting layer 10 is embedded into a route 1.

The conductor arrangement 6 further comprises a second supporting layer 20 and a third supporting layer 30. A second electric line 21 is positioned within the second supporting layer 20 and a third electric line 31 is positioned within the second supporting layer 30. The second and third electric line 21, 31 can be used to carry a second and a third phase of a multiphase primary winding 5a, 5b, 5c, respectively. As the first supporting layer 10, the second and the third supporting layers 20, 30 each comprises longitudinal sides 22a, 22b, 32a, 32b and face sides 23a, 23b, 33a, 33b which extend transversely to the direction of travel. The second and the third electric line 21, 31 extend along a longitudinal direction of the second and the third supporting layer 20, 30 in a serpentine manner, respectively. The first, second, and third supporting layer 10, 20, 30 have the same length and width.

The first supporting layer 10 and the second supporting layer 20 are foldably connected to each other, wherein the foldable connection is provided by a folding line 40a. It is shown that the longitudinal side 12b of the first supporting layer 10 is foldably connected to the longitudinal side 22a of the second supporting layer 20. The folding line 40a is provided by the connection of the longitudinal sides 12b, 22a. Thus, the second supporting layer 20 can be folded onto the first supporting layer 10 about the longitudinal side 12b, 22a. The second supporting layer 20 and the third supporting layer 30 are foldably connected in the same manner, wherein the foldable connection is provided by a folding line 40b.

Each of the supporting layers 10, 20, 30 comprises connection holes 14a, 14b, 24a, 24b, 34a, 34b. By means of the connection holes 14a, 14b, 24a, 24b, 34a, 34b, the respective electric lines 11, 21, 31 can be electrically connected. The connection holes 14a, 14b, 24a, 24b, 34a, 34b can be through-holes. Preferably, the connection holes 14a, 14b, 24a, 24b, 34a, 34b are arranged at face side ends of the supporting layers 10, 20, 30.

It is shown that the electric lines 11, 12, 13 are arranged within the supporting layers 10, 20, 30 such that sections of the electric lines 11, 12, 13 which extend transversely to the longitudinal direction are displaced at a predetermined distance in the longitudinal direction in the unfolded configuration. An exemplary displacement d12 between a section of the first electric line 11 which extends transversely to the longitudinal direction and a corresponding section of the second electric line 21 which also extends transversely to the longitudinal direction is shown. In the same manner, an exemplary displacement d23 between the section of the second electric line 21 which extends transversely to the longitudinal direction and a corresponding section of the third electric line 31 which also extends transversely to the longitudinal direction is shown. The displacements d12, d23 provide a desired phase shift of the three-phase alternating current which is generated by the different electric lines 11, 21, 31.

It is to be noted that the supporting layers 10, 20, 30 without the electric lines 11, 21, 31 provide the proposed cable support arrangement which is also foldable.

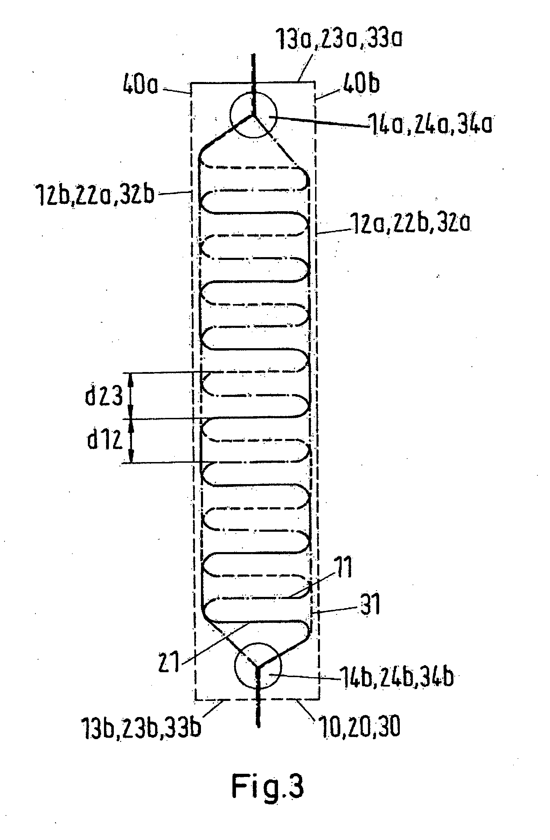

In Fig. 3, a plan view of the three-phase conductor arrangement 6 shown in Fig. 2 in a folded configuration is shown. To achieve the folded configuration, the first supporting layer 10 shown in Fig. 2 is folded about the folding line 40a under the second supporting layer 20. Also, the third supporting layer 30 is folded about the folding line 40b on top of the second supporting layer 20. The first, the second, and the third supporting layer 10, 20, 30 are folded such that all supporting layers 10, 20, 30 are congruent to each other. This means that the face sides 13a, 23a, 33a, 13b, 23b, 33b and longitudinal sides 12a, 22b, 32a, 12b, 22a, 32b of the supporting layers 10, 20, 30 are aligned in the folded configuration and no overlap exists. It is also shown that the connection holes 14a, 24a, 34a, 14b, 24b, 34b are aligned in the folded configuration. This advantageously allows to electrically connect the electric lines 11, 21, 31 of the supporting layers 10, 20, 30 through a common connection hole.

In one embodiment, connection holes 14a, 24a, 34a, 14b, 24b, 34b of one supporting layer 10, 20, 30 can be designed as a blind hole, wherein the respective supporting layer 10, 20, 30 forms a top or bottom supporting layer 10, 20, 30 in a folded configuration, wherein the connection holes 14a, 24a, 34a, 14b, 24b, 34b of the one supporting layer 10, 20, 30 are designed such that the electric lines 11, 21, 31 are not connectable from a top or a bottom side if the conductor arrangement 6 is in a folded configuration.

For example, the connection holes 14a, 14b of the bottom supporting layer which is in this case the first supporting layer 10 can be designed as a blind hole. Moreover, the connection holes 14a, 24a of the first supporting layer 10 are designed such that the electric lines 11, 21, 31 are not connectable from a bottom side if the conductor arrangement 6 is in a folded configuration. This advantageously provides an enhanced protection of the electric lines 11, 21, 31 if the conductor arrangement is embedded into a route 1 (see Fig. 1) in a folded configuration.

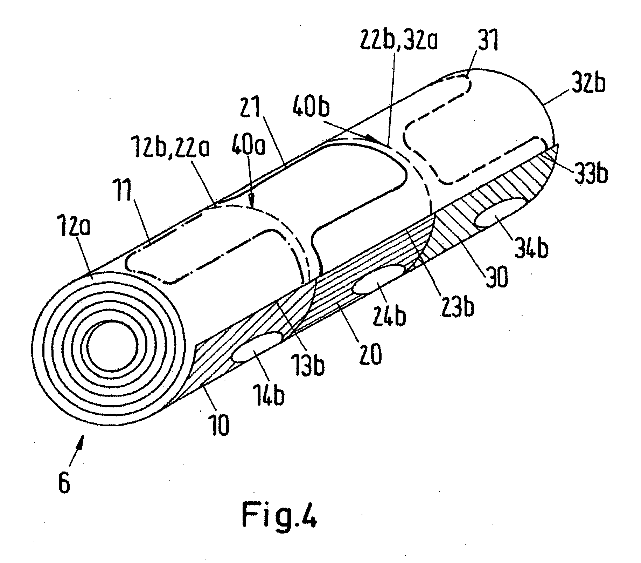

Fig. 4 shows the conductor arrangement 6 in a rolled-up or furled configuration. To achieve the shown configuration, the unfolded conductor arrangement 6 shown in Fig. 2 is rolled up about an axis transverse to the longitudinal direction of the supporting layers 10, 20, 30. To provide the rolled-up configuration, the material of the supporting layers 10, 20, 30 and the material of the electric lines 11, 21, 31 should provide a sufficient flexibility.

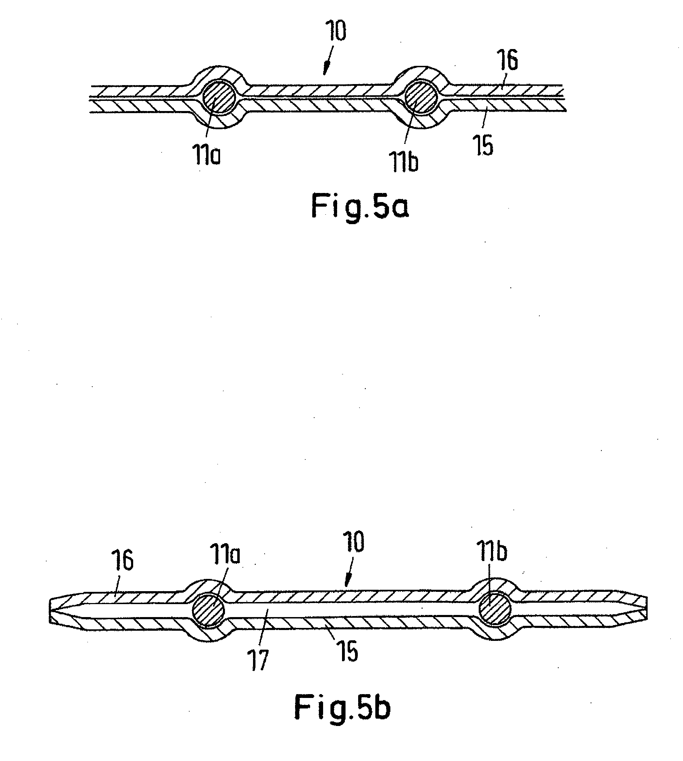

It is possible, that the first, the second, and the third supporting layer 10, 20, 30 each comprise a lower coating layer 15 and an upper coating layer 16 (see Fig. 5a). The lower and upper coating layers 15, 16 are connected to each other at connection areas on opposite sides of the electric lines 11, 21, 31 so that the respective electric line 11, 21, 31 is enclosed by the lower and upper coating layer 15, 16.

Fig. 5a shows a first supporting layer 10 comprising a lower coating layer 15 and an upper coating layer 16 which are laid on top of each other. Except for regions where electric line sections 11 a, 11 b extend, the coating layers 15, 16 are in direct contact with each other at their surfaces.

Fig. 5b shows a cross section through a second embodiment of a first supporting layer 10. In contrast to the arrangement shown in Fig. 5a, the lower coating layer 15 and the upper coating layer 16 are in direct contact with each other only at their margin regions, and indirectly contact each other elsewhere. The interior 17 of the first supporting layer 10 which is delimited by the two coating layers 15, 16, is at least partly and preferably completely filled by an additional material, e.g. a resin. This means that the resin or other additional material forms an indirect connection of the two coating layers 15, 16 and the electric line sections 11a, 11b.

## Claims

1. A cable support for supporting a conductor arrangement (6, 6a, 6b, 6c) for producing an electromagnetic field and thereby transferring energy to vehicles on a surface of a route (1), wherein the cable support arrangement comprises a first supporting layer (10) adapted to position and/or to hold a plurality of line sections of a first electric line (11),
and wherein
the cable support arrangement further comprises a second supporting layer (20) adapted to position and/or to hold a plurality of line sections of a second electric line (21), **characterised in that** the first and the second supporting layer (10, 20) are foldably connected to each other.

2. The cable support of claim 1, wherein the cable support comprises a third supporting layer (30) adapted to position and/or to hold a plurality of line sections of a third electric line (31), wherein the first, the second, and the third supporting layer (10, 20, 30) are foldably connected to each other.

3. The cable support of one of the claims 1 to 2, wherein the foldable connection is provided by at least one folding line (40a, 40b).

4. The cable support of one of the claims 1 to 3, wherein the first supporting layer (10) and/or the second supporting layer (20) and/or the third supporting layer (30) each comprise a lower coating layer (15) and an upper coating layer (16), wherein the corresponding electric line (11, 21, 31) is placeable in between the lower and upper coating layer (15, 16).

5. The cable support of one of the claims 1 to 4, wherein at least two supporting layers (10, 20, 30) or all supporting layers (10, 20, 30) are parts of a common sheet.

6. The cable support of one of the claims 1 to 5, wherein the cable support is rollable such that the cable support can be rolled up in an unfolded and/or folded configuration.

7. A conductor arrangement for producing an electromagnetic field and thereby transferring energy to vehicles on a surface of a route (1), wherein the conductor arrangement (6, 6a, 6b, 6c) comprises a cable support according to one of the claims 1 to 6 and a first electric line (11) positioned on or within the first supporting layer (10), wherein the conductor arrangement (6, 6a, 6b, 6c) further comprises a second electric line (21) positioned on or within the second supporting layer (20).

8. The conductor arrangement of claim 7, wherein the first and/or the second supporting layer (10, 20) each comprise a lower coating layer (15) and an upper coating layer (16), wherein the lower and upper coating layer (15, 16) are connected to each other at connection areas on opposite sides of the at least one electric line (11, 21) so that the respective electric line (11, 21) is enclosed by the lower and upper coating layer (15, 16) and optionally by additional material establishing the connection of the lower and upper coating layer (15, 16).

9. The conductor arrangement of claim 8, wherein the connection areas on the opposite sides extend along the extension of the at least one electric line (11, 21).

10. The conductor arrangement of one of the claims 8 to 9, wherein at least one position holder is located in between the lower and upper coating layer (15, 16), wherein the position holder connects at least one section of the at least one electric line (11, 21) with another section of the electric line (11, 21) for holding the sections in position relative to each other.

11. A route for vehicles, wherein the conductor arrangement (6, 6a, 6b, 6c) of one of the claims 7 to 10 is arranged on, outside or within the route (1) in a folded configuration.

12. A method of manufacturing a cable support for supporting a conductor arrangement (6, 6a, 6b, 6c), which is adapted to produce an electromagnetic field and thereby to transfer energy to vehicles on a surface of a route (1), wherein the following steps are performed:
- providing a first supporting layer (10) adapted to position and/or to hold a plurality of line sections of a first electric line (11), and
- providing a second supporting layer (20) adapted to position and/or to hold a plurality of line sections of a second electric line (21), and **characterised in that** the following step is performed
- providing a foldable connection between the first and the second supporting layer (10, 20).

13. A method of manufacturing a conductor arrangement (6, 6a, 6b, 6c), which is adapted to produce an electromagnetic field and thereby to transfer energy to vehicles on a surface of a route (1), wherein the method comprises the steps of the method according to claim 12, wherein the following steps are performed:
- placing a first electric line (11) on or within the first supporting layer (10),
- placing a second electric line (21) on or within the second supporting layer (20).

14. The method of claim 13, wherein, for each supporting layer (10, 20), the following steps are performed:
- providing a lower coating layer (15),
- providing an upper coating layer (16),
- placing the respective electric line (11, 21) in between the lower and upper coating layer (15, 16) to form a conductor arrangement (6, 6a, 6b, 6c) comprising the lower and upper coating layer (15, 16) as well as the at least one electric line (11, 21).

15. A method of building a route (1), wherein the conductor arrangement (6, 6a, 6b, 6c) of one of claims 7 to 10 is folded to provide a desired multiphase primary winding and arranged on, outside or within the route (1).

## Patentansprüche

1. Kabelhalter zur Halterung einer Leiteranordnung (6, 6a, 6b, 6c) zur Erzeugung eines elektromagnetischen Felds und damit zur Übertragung von Energie an Fahrzeuge auf einer Oberfläche einer Fahrbahn (1), wobei die Kabelhalteranordnung eine erste Halterungsschicht (10) aufweist, die dazu eingerichtet ist, eine Mehrzahl von Leiterabschnitten eines ersten elektrischen Leiters (11) zu positionieren und/oder zu halten und wobei die Kabelhalteranordnung außerdem eine zweite Halterungsschicht (20) aufweist, die dazu eingerichtet ist, eine Mehrzahl von Leiterabschnitten eines zweiten elektrischen Leiters (21) zu positionieren und/oder zu halten,
**dadurch gekennzeichnet, dass**
die erste und zweite Halterungsschicht (10, 20) faltbar miteinander verbunden sind.

2. Kabelhalter nach Anspruch 1, wobei der Kabelhalter eine dritte Halterungsschicht (30) aufweist, die dazu eingerichtet ist eine Mehrzahl von Leiterabschnitten eines dritten elektrischen Leiters (31) zu positionieren und/oder zu halten, wobei die erste, zweite und dritte Halterungsschicht (10, 20, 30) faltbar miteinander verbunden sind.

3. Kabelhalter nach einem der Ansprüche 1 bis 2, wobei die faltbare Verbindung über mindestens eine Faltlinie (40a, 40b) erfolgt.

4. Kabelhalter nach einem der Ansprüche 1 bis 3, wobei die erste Halterungsschicht (10) und/oder die zweite Halterungsschicht (20) und/oder die dritte Halterungsschicht (30) jeweils eine untere Schicht (15) und eine obere Schicht (16) aufweisen, wobei der entsprechende elektrische Leiter (11, 21, 31) zwischen der unteren und oberen Schicht (15, 16) platzierbar ist.

5. Kabelhalter nach einem der Ansprüche 1 bis 4, wobei mindestens zwei Halterungsschichten (10, 20, 30) oder alle Halterungsschichten (10, 20, 30) Teile einer gemeinsamen Bahn sind.

6. Kabelhalter nach einem der Ansprüche 1 bis 5, wobei der Kabelhalter derart aufrollbar ist, dass der Kabelhalter in einer zusammengefalteten und/oder ungefalteten Konfiguration aufgerollt werden kann.

7. Leiteranordnung zur Erzeugung eines elektromagnetischen Felds und damit zur Übertragung von Energie an Fahrzeuge auf der Oberfläche einer Fahrbahn (1), wobei die Leiteranordnung (6, 6a, 6b, 6c) einen Kabelhalter nach einem der Ansprüche 1 bis 6 aufweist, sowie einen ersten elektrischen Leiter(11), der auf oder innerhalb der ersten Halterungsschicht (10) positioniert ist, wobei die Leiteranordnung (6, 6a, 6b, 6c) außerdem einen zweiten elektrischen Leiter (21) aufweist, der auf oder innerhalb der zweiten Halterungsschicht (20) positioniert ist.

8. Leiteranordnung nach Anspruch 7, wobei die erste und/oder zweite Halterungsschicht (10, 20) jeweils eine untere Schicht (15) und eine obere Schicht (16) aufweisen, wobei die untere und obere Schicht (15, 16) an Verbindungsbereichen auf gegenüberliegenden Seiten des mindestens einen elektrischen Leiters (11, 21) miteinander verbunden sind, so dass der jeweilige elektrische Leiter (11, 21) durch die untere und obere Schicht (15, 16) und optional durch ein zusätzliches die Verbindung zwischen der unteren und oberen Schicht bildendes Material eingeschlossen sind.

9. Leiteranordnung nach Anspruch 8, wobei sich die Verbindungsbereiche auf den gegenüberliegenden Seiten entlang der Erstreckung des mindestens einen elektrischen Leiters (11, 21) erstrecken.

10. Leiteranordnung nach einem der Ansprüche 8 bis 9, wobei sich zwischen der unteren und oberen Schicht (15, 16) mindestens ein Positionshalter befindet, wobei der Positionshalter mindestens einen Abschnitt des mindestens einen elektrischen Leiters (11, 21) mit einem anderen Abschnitt des elektrischen Leiters (11, 21) verbindet, um die Abschnitte relativ zueinander in Position zu halten.

11. Fahrbahn für Fahrzeuge, wobei die Leiteranordnung (6, 6a, 6b, 6c) nach einem der Ansprüche 7 bis 10 auf, außerhalb oder innerhalb der Fahrbahn (1) in einer zusammengelegten Konfiguration angeordnet ist.

12. Verfahren zur Herstellung eines Kabelhalters zur Halterung einer Leiteranordnung (6, 6a, 6b, 6c), die dazu eingerichtet ist, ein elektromagnetisches Feld zu erzeugen und damit Energie an Fahrzeuge auf der Oberfläche einer Fahrbahn (1) zu übertragen, bei dem folgende Schritte durchgeführt werden:
- Bereitstellung einer ersten Halterungsschicht (10), die dazu eingerichtet ist, eine Mehrzahl von Leiterabschnitten eines ersten elektrischen Leiters (11) zu positionieren und/oder zu halten, und
- Bereitstellung einer zweiten Halterungsschicht (20), die dazu eingerichtet ist, eine Mehrzahl von Leiterabschnitten eines zweiten elektrischen Leiters (21) zu positionieren und/oder zu halten,
**dadurch gekennzeichnet, dass** folgender Schritt durchgeführt wird:
- Bereitstellung einer zusammenfaltbaren Verbindung zwischen der ersten und der zweiten Halterungsschicht (10, 20).

13. Verfahren zur Herstellung einer Leiteranordnung (6, 6a, 6b, 6c), die dazu eingerichtet ist, ein elektromagnetisches Feld zu erzeugen und damit Energie an Fahrzeuge auf einer Oberfläche einer Fahrbahn (1) zu übertragen, wobei das Verfahren die Schritte des Verfahrens nach Anspruch 12 umfasst, wobei folgende Schritte durchgeführt werden:
- Platzieren eines ersten elektrischen Leiters (11) auf oder innerhalb der ersten Halterungsschicht (10),
- Platzieren eines zweiten elektrischen Leiters (21) auf oder innerhalb der zweiten Halterungsschicht (20).

14. Verfahren nach Anspruch 13, wobei für jede Halterungsschicht (10, 20) folgende Schritte durchgeführt werden:
- Bereitstellung einer unteren Schicht (15),
- Bereitstellung einer oberen Schicht (16),
- Platzieren des jeweiligen elektrischen Leiters (11, 21) zwischen die untere und obere Schicht (15, 16) zur Bildung einer Leiteranordnung (6, 6a, 6b, 6c) umfassend die obere und untere Schicht (15, 16) sowie den mindestens einen elektrischen Leiter (11, 21).

15. Verfahren zum Bauen einer Fahrbahn (1), wobei die Leiteranordnung (6, 6a, 6b, 6c) nach einem der Ansprüche 7 bis 10 zur Bereitstellung einer gewünschten mehrphasigen primären Windung zusammengefaltet wird und auf, außerhalb oder innerhalb der Fahrbahn (1) angeordnet wird.

## Revendications

1. Support de câble pour supporter un agencement de conducteur (6, 6a, 6b, 6c) pour produire un champ électromagnétique et transférer ainsi de l'énergie à des véhicules sur une surface d'une route (1), dans lequel l'agencement de support de câble comprend une première couche de support (10) adaptée pour positionner et/ou maintenir une pluralité de sections de ligne d'une première ligne électrique (11), et dans lequel l'agencement de support de câble comprend en outre une deuxième couche de support (20) adaptée pour positionner et/ou maintenir une pluralité de sections de ligne d'une deuxième ligne électrique (21), **caractérisé en ce que** la première et la deuxième couche de support (10, 20) sont reliées entre elles de manière pliable.

2. Support de câble selon la revendication 1, dans lequel le support de câble comprend une troisième couche de support (30) adaptée pour positionner et/ou maintenir une pluralité de sections de ligne d'une troisième ligne électrique (31), dans lequel la première, la deuxième et la troisième couche de support (10, 20, 30) sont reliées l'une à l'autre de manière pliable.

3. Support de câble selon l'une des revendications 1 à 2, dans lequel la connexion pliable est fournie par au moins une ligne de pliage (40a, 40b).

4. Support de câble selon l'une des revendications 1 à 3, dans lequel la première couche de support (10) et/ou la deuxième couche de support (20) et/ou la troisième couche de support (30) comprennent chacune une couche de revêtement inférieure (15) et une couche de revêtement supérieure (16), dans lequel la ligne électrique correspondante (11, 21, 31) peut être placée entre les couches de revêtement inférieure et supérieure (15, 16).

5. Support de câble selon l'une des revendications 1 à 4, dans lequel au moins deux couches de support (10, 20, 30) ou toutes les couches de support (10, 20, 30) font partie d'une feuille commune.

6. Support de câble selon l'une des revendications 1 à 5, dans lequel le support de câble est enroulable de manière que le support de câble puisse être enroulé dans une configuration dépliée et/ou pliée.

7. Agencement de conducteur pour produire un champ électromagnétique et transférer ainsi de l'énergie à des véhicules sur une surface d'une route (1), dans lequel l'agencement de conducteur (6, 6a, 6b, 6c) comprend un support de câble selon l'une des revendications 1 à 6 et une première ligne électrique (11) positionnée sur ou dans la première couche de support (10), dans lequel l'agencement de conducteur (6, 6a, 6b, 6c) comprend en outre une deuxième ligne électrique (21) positionnée sur ou dans la deuxième couche de support (20).

8. Agencement de conducteur selon la revendication 7, dans lequel la première et/ou la deuxième couche de support (10, 20) comprennent chacune une couche de revêtement inférieure (15) et une couche de revêtement supérieure (16), dans lequel les couches de revêtement inférieure et supérieure (15, 16) sont reliées entre elles au niveau de zones de connexion sur des côtés opposés de l'au moins une ligne électrique (11, 21) de manière que la ligne électrique respective (11, 21) soit enfermée par les couches de revêtement inférieure et supérieure (15, 16) et éventuellement par un matériau additionnel établissant la connexion des couches de revêtement inférieure et supérieure (15, 16).

9. Agencement de conducteur selon la revendication 8, dans lequel les zones de connexion sur les côtés opposés s'étendent suivant l'extension de l'au moins une ligne électrique (11, 21).

10. Agencement de conducteur selon l'une des revendications 8 à 9, dans lequel au moins un élément de maintien de position est situé entre les couches de revêtement inférieure et supérieure (15, 16), dans lequel l'élément de maintien de position connecte au moins une section de l'au moins une ligne électrique (11, 21) avec une autre section de la ligne électrique (11, 21) pour maintenir les sections en position l'une par rapport à l'autre.

11. Route pour véhicules, dans laquelle l'agencement de conducteur (6, 6a, 6b, 6c) selon l'une des revendications 7 à 10 est agencé sur la route (1) ou à l'extérieur ou à l'intérieur de celle-ci dans une configuration pliée.

12. Procédé de fabrication d'un support de câble pour supporter un agencement de conducteur (6, 6a, 6b, 6c) qui est adapté pour produire un champ électromagnétique et transférer ainsi de l'énergie à des véhicules sur une surface d'une route (1), dans lequel les étapes suivantes sont réalisées :
- la fourniture d'une première couche de support (10) adaptée pour positionner et/ou maintenir une pluralité de sections de ligne d'une première ligne électrique (11), et
- la fourniture d'une deuxième couche de support (20) adaptée pour positionner et/ou maintenir une pluralité de sections de ligne d'une deuxième ligne électrique (21), et **caractérisé en ce que** l'étape suivante est réalisée :
- la fourniture d'une connexion pliable entre la première et la deuxième couche de support (10, 20).

13. Procédé de fabrication d'un agencement de conducteur (6, 6a, 6b, 6c) qui est adapté pour produire un champ électromagnétique et transférer ainsi de l'énergie à des véhicules sur une surface d'une route (1), dans lequel le procédé comprend les étapes du procédé selon la revendication 12, dans lequel les étapes suivantes sont réalisées :
- la pose d'une première ligne électrique (11) sur ou dans la première couche de support (10),
- la pose d'une deuxième ligne électrique (21) sur ou dans la deuxième couche de support (20).

14. Procédé selon la revendication 13, dans lequel, pour chaque couche de support (10, 20), les étapes suivantes sont réalisées :
- la fourniture d'une couche de revêtement inférieure (15),
- la fourniture d'une couche de revêtement supérieure (16),
- la pose de la ligne électrique respective (11, 21) entre les couches de revêtement inférieure et supérieure (15, 16) pour former un agencement de conducteur (6, 6a, 6b, 6c) comprenant les couches de revêtement inférieure et supérieure (15, 16) ainsi que l'au moins une ligne électrique (11, 21).

15. Procédé de construction d'une route (1), dans lequel l'agencement de conducteur (6, 6a, 6b, 6c) selon l'une des revendications 7 à 10 est plié pour fournir un enroulement primaire multi-phases désiré et agencé sur la route (1) ou à l'extérieur ou à l'intérieur de celle-ci.
